# EUROPEAN PATENT APPLICATION

(11) **EP 1 757 380 A1**
(43) Date of publication of application: **28.02.2007**
(21) Application number: 06253298.1
(22) Date of filing: 26.06.2006
(51) Int. Cl.: B21D 11/20, B23K 26/00, B23K 26/42

(54) **System and method for thermal forming with active cooling and parts formed thereby**

(30) Priority: 26.08.2005 US 214489
(71) Applicant: GENERAL ELECTRIC COMPANY, Schenectady, NY 12345 (US)
(72) Inventor: Zhang, Wenwu, Schenectady, New York 12309 (US); Mika, David Peter, Clifton Park, New York 12065 (US); Jones, Marshall Gordon, Scotia, New York 12302 (US); Marte, Judson Sloan, Wynantskill, New York 12198 (US); Graham, Michael Evans, Slingerlands, New York 12159 (US); Farrell, Brian Harlow, Amsterdam, New York 12010 (US)
(74) Representative: Bedford, Grant Richard

(57) **Abstract**

A method for thermal forming includes determining a process window for initiating cooling, locally heating at least one region (22) on a specimen (20) to achieve a pre-selected geometry deformation, initiating active cooling of the heated region within the process window to control at least one material property of the specimen at the heated region and actively cooling the heated region to a pre-selected temperature. A system (10) for thermal forming includes a thermal source (12) for heating the region on the specimen to achieve a pre-selected geometry deformation, an active cooling module (14) for cooling the region to a pre-selected temperature and a control module (16) to control at least one of the thermal source and active cooling module in accordance with a process window to initiate active cooling to control at least one material property of the specimen at the heated region. The process window has an upper time limit for initiating cooling.

## Description

The invention relates generally to thermal forming and, more particularly, to laser forming alloys. Laser forming is a thermal forming process that uses laser energy as a thermal source to induce permanent deformation in a target without the use of hard tooling. Laser forming has been used to treat a number of materials, including metals. Laser forming is generally used to bend sheet or tubular workpieces.

In addition to inducing geometry changes, laser forming generally induces microstructural changes to the workpiece. The local alteration of the microstructure of the workpiece typically leads to degradation in mechanical properties such as strength and fatigue life. This degradation can readily be verified by measuring the microhardness profile across the laser scanned region. Experimental data obtained by the present applicants is discussed below. As discussed below, a substantial reduction in hardness was observed for a laser formed Inconel 718 workpiece. Inconel 718 is a trademark of INCO Alloys International, Inc. Huntington, WV. The alloy is also known as UNS 07718. This local reduction in microhardness indicates a significant reduction in the mechanical strength and fatigue life of the laser formed workpiece. Consequently, conventional laser forming techniques are ill-suited for application to strength- or fatigue- sensitive geometry tuning (adjustment) or forming tasks, such as three dimensional (3D) blade geometry repair.

One possibility for mitigating the negative thermal effects associated with laser forming is to reduce the line energy, where line energy is defined as the power divided by the scanning velocity. Smaller line energies tend to induce lower peak temperature and less thermal diffusion into the material. However, the magnitude of the induced geometry change also decreases with line energy. When the line energy is reduced below a certain value, the process becomes difficult to control due to the comparable magnitude of the induced stress/strain field and the pre-existing stress/strain field. The processing window found in this way is much narrower than the processing windows determined without strict strength and fatigue considerations. Consequently, this smaller line energy method is slow and is generally impractical for most applications.

It would therefore be desirable to provide innovations for laser forming to reduce local microstructural changes in the workpieces, so that the innovative laser forming techniques can be applied to strength and fatigue sensitive components. It would further be desirable to reliably detect and control both the microstructural and performance changes associated with laser forming.

Briefly, one aspect of the present invention resides in a method for thermal forming. The method includes determining a process window for initiation of a cooling process, locally heating at least one region on a specimen to achieve a pre-selected geometry deformation, initiating active cooling of the heated region within the process window to control at least one material property of the specimen at the heated region and actively cooling the heated region to a pre-selected temperature.

Another aspect of the present invention resides in a system for thermal forming. The system includes a thermal source configured for heating at least one region on a specimen to achieve a pre-selected geometry deformation and an active cooling module configured for cooling the heated region to a pre-selected temperature. The system further includes a control module configured to control at least one of the thermal source and the active cooling module in accordance with a process window in order to initiate active cooling of the heated region by the active cooling module within the process window. In this manner, at least one material property of the specimen at the heated region is controlled. The process window has an upper time limit for initiation of the cooling.

These and other features, aspects, and advantages of the present invention will become better understood when the following detailed description is read with reference to the accompanying drawings in which like characters represent like parts throughout the drawings, wherein:
FIG. 1 depicts a drop in micro-hardness in laser-scanned regions for an Inconel 718 plate;
FIG. 2 illustrates microhardness measurements performed on an Inconel 718 coupon after laser scanning;
FIG. 3 depicts a lased surface for the A-A section of FIG. 2;
FIG. 4 shows microhardness data for an Inconel 718 coupon that was allowed to air cool after laser scanning;
FIG. 5 shows microhardness data for an Inconel 718 coupon that was actively cooled after laser scanning;
FIG. 6 schematically depicts an exemplary system for thermal forming with quench cooling; and
FIG. 7 illustrates another active cooling embodiment of the invention that incorporates liquid (or gas) spray cooling.

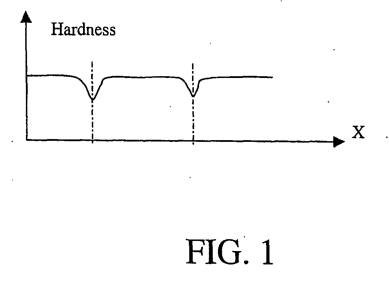

A method embodiment of the invention is described with reference to FIGS. 1-7. A method for thermal forming includes determining a process window for initiation of a cooling process, locally heating at least one region 22 on a specimen 20 to achieve a pre-selected geometry deformation, initiating active cooling of the heated region 22 within the process window to control at least one material property of the specimen at the heated region 22 and actively cooling the heated region 22 to a pre-selected temperature. According to a particular embodiment, the pre-selected temperature is room temperature.

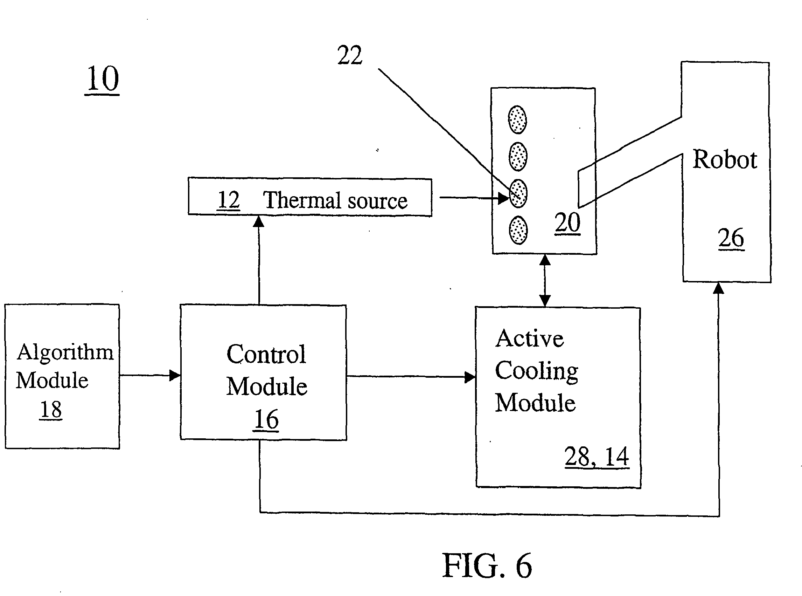

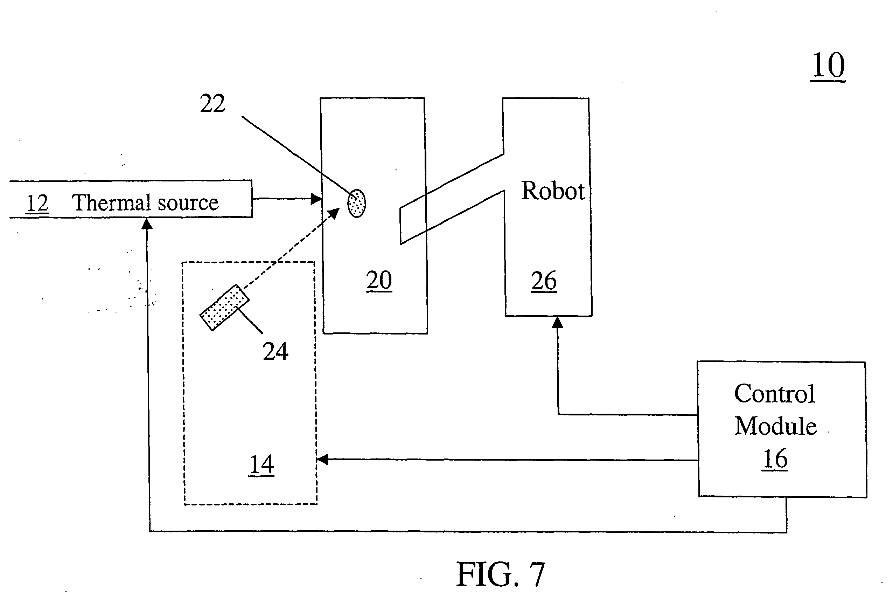

The local heating may be performed using a thermal source 12, such as a laser 12, as indicated for example in FIGS. 6 and 7. Exemplary lasers 12 include CW and pulsed lasers, and the present invention is not limited to any specific type of laser, nor to a specific wavelength. Other exemplary thermal sources 12 include, without limitation, an induction heating system, a plasma arc source, a high power infrared arc lamp heating system and a resistance heating source.

The active cooling may be performed using an active cooling module 14, as indicated for example in FIGS. 6 and 7. Exemplary active cooling modules 14 include a liquid bath 28 configured to receive the specimen 20, as indicated for example in FIG. 6. Exemplary liquids for use in liquid bath 28 include, without limitation, water, liquid argon, liquid nitrogen, as well as solutions with corrosion-resistant reagent. In other embodiments, reference numeral 28 in FIG. 6 represents a fluidized particle bed and/or an initially solid coolant. For the fluidized particle bed embodiment, exemplary particles are formed of copper or another high thermal conductivity metal, and the particles (not shown) provide conductive cooling of the specimen 20. For the initially solid coolant embodiment, the coolant is a solid that melts, for example ice or fat. The transformation of solid to liquid absorbs energy from the specimen 20, thereby cooling the specimen 20.

Another exemplary active cooling module 14 includes a liquid spray source 24 configured for spray cooling the specimen 20. Exemplary liquids for use with liquid source 24 include, without limitation, water, liquid argon, and liquid nitrogen. Liquid spray source may further be configured to spray relatively soft solid coolants onto the specimen 20. As noted above, the solid coolants cool the specimen 20 by transformation to a liquid.

Another exemplary active cooling module includes a gas spray source (also indicated by reference numeral 24 in FIG. 7) configured for spray cooling the heated region 22. For the exemplary embodiment shown in FIG. 7, gas spray source 24 sprays a gas jet at the heated region 22 on the specimen 20. Exemplary gases for use with gas source 24 include, without limitation, low temperature compressed air, argon, and nitrogen. The active cooling module may further incorporate both the liquid bath 28 and the liquid (or gas) spray source 24. Beneficially, the active cooling module 14 cools the specimen 20 to the pre-selected temperature in a short time. For example, by quench cooling the specimen 20 in a liquid bath 28, the specimen 20 is brought to room temperature in a time short enough to retain the desired microstructure. For laser forming of UNS 07718 alloy plates, this time is less than one second. An example liquid bath 28 is a room-temperature liquid bath.

As discussed above, conventional laser forming typically alters the microstructural properties of the specimen 20. Material properties of interest include strength, fatigue and creep performance. To infer the presence or absence of the microstructural features that affect the material properties of interest, microhardness can be measured. FIG. 1 depicts a drop in micro-hardness in laser-scanned regions for an Inconel 718 plate. Applicants observed a micro-hardness drop in excess of 30% in the laser heated regions, relative to the original material hardness. The resulting change in local microstucture can lead to degraded strength and fatigue performance. Thus, local changes in the microstructural properties of strength and fatigue sensitive specimens 20, such as blades for stationary or aircraft engine components, for example, are undesirable. The process window thus should be selected to induce the pre-selected geometry deformation and minimize local changes to the microstructure of the specimen 20. According to a particular embodiment, the process window includes an upper time limit for initiation of the cooling process. According to a more particular embodiment, the process window includes both the upper time limit and a lower time limit for initiation of the cooling process. The upper time limit is selected to minimize local changes to the microstructure of the specimen 20, and the lower time limit is selected to achieve the desired pre-selected geometry deformation. The lower time limit must be sufficiently high to prevent the thermal energy from being dissipated before the desired geometry deformation is achieved. The upper time limit must be sufficiently low to prevent a phase transformation from occurring in the locally heated region(s) 22. Thus, the process window is selected to control the latency period for the cooling.

As indicated above, microhardness is a critical material property of strength and fatigue sensitive specimens 20, such as blades. According to a particular embodiment, active cooling of the heated region 22 is initiated within the process window to control the microhardness of the specimen at the heated region 22. According to a more particular embodiment, the microhardness is controlled to within about three standard deviations of the mean initial hardness. For specific examples, the microhardness is controlled to within about fifteen percent (15%) and more particularly, to with about ten percent (10%) of the pre-thermally treated material.

In one embodiment, the determination of the process window includes determining at least one of the upper and lower time limits using experimental data. For a particular embodiment, the upper limit is determined using experimental data. Exemplary experimental data includes microstructure observation data and microhardness data. In a particular example, the process window is determined based on microhardness data. In another particular example, the process window is determined based on microhardness data in combination with microstructure observation data. In one example, the experimental data is acquired by locally heating at least one region on a coupon or plate comprising the specimen material. For example, an UNS 07718 alloy coupon would be used for UNS 07718 alloy specimens.

In another embodiment, the determination of the process window includes determining at least one of the upper and lower time limits using simulation data. For example, the thermal forming process can be simulated using a commercial finite element modeling (FEM) package, such as the FEM package from Abaqus, Inc with headquarters in Providence, RI. In one example, the thermal profile in the heating stage was extracted. The peak temperature at a given set of processing conditions was then related to microhardness test results. Thus, by knowing the temperature for the simulation, one can predict the hardness variation, and decide the upper and lower time limits for active cooling. Furthermore, more complex FEM models can be built to directly predict the microhardness change under certain thermal treatment of the material, in order to completely determine the upper and lower time limits via simulation.

In order to maintain their strength, thermal forming operations should not change the number, size, or spacing of precipitates in precipitation-strengthened alloys. As used herein, the phrase "precipitation-strengthened alloy" should be understood to encompass both precipitation-strengthened alloys and precipitation-hardened alloys. According to a particular embodiment, the specimen comprises a precipitation-strengthened alloy, and the precipitation-strengthened alloy comprises a plurality of precipitates prior to the heating step. For this embodiment, the process window comprises an upper time limit for initiation of the cooling process, and the upper limit is selected such that the precipitates are substantially maintained in the heated region of the specimen. More particularly, the time limit is dependent on the temperature achieved. As used here, the phrase "substantially maintained" should be understood to mean that the microhardness resulting from the presence of the precipitates does not degrade by more than three standard deviations from the mean microhardness prior to laser forming. In one example, at least eighty percent (80%) of the precipitates are preserved after the laser forming operations. In other examples, at least ninety percent (90%), and more particularly, at least ninety-five percent (95%) of the precipitates are preserved after the laser forming operations.

One exemplary precipitation strengthened alloy is a nickel-based alloy. As used herein, "nickel based alloys" should be understood to encompass nickel-based superalloys. As known to those skilled in the art, superalloys are a class of alloys that exhibit high strength at elevated temperature. According to a particular embodiment, the nickel-based alloy comprises a volume fraction of a γ" phase prior to the heating step. For this embodiment, the process window comprises an upper time limit for initiation of the cooling process, and the upper limit is selected such that the volume fraction of the γ" phase is substantially maintained for the heated region of the specimen. As used here, the phrase "substantially maintained" should be understood to mean that the volume fraction of the γ" phase for the heated region after the laser forming operations is great enough that the microhardness resulting from the presence of the precipitates does not degrade by more than three standard deviations from the mean microhardness prior to laser forming. In one example, the volume fraction of the γ" phase for the heated region after the laser forming operations is at least eighty percent (80%) of the volume fraction of the γ" phase prior to the laser forming operations. In other examples, the volume fraction of the γ" phase for the heated region after the laser forming operations is at least ninety percent (90%), and more particularly, at least ninety-five percent (95%) of the volume fraction of the γ" phase prior to the laser forming operations. According to a more particular embodiment, the nickel-based alloy comprises UNS 07718 alloy. UNS 07718 is a nickel-based super alloy that is suitable for applications requiring high strength over a wide range of temperature.

Application of fast active cooling to precipitation-strengthened alloys is beneficial for the following reasons. Prior to laser forming, the precipitation-strengthened alloy is in the solution treated and aged condition. In this condition, precipitates provide strength to the alloy. Laser heating imparts intense heat to the alloy very quickly. This can cause the precipitates to coarsen and dissolve, reducing the strength of the alloy to unacceptably low levels. Although it is possible to regain this hardness by performing additional thermal treatment, these treatments may undo some of the beneficial forming achieved during the laser forming process. Because the growth and dissolution of the strengthening phase is controlled by diffusion, it is sensitive to both temperature and the time at the temperature. Therefore, it is possible to circumvent the precipitate growth and dissolution reaction by limiting the peak temperature and the time the alloy is at an elevated temperature to a short duration.

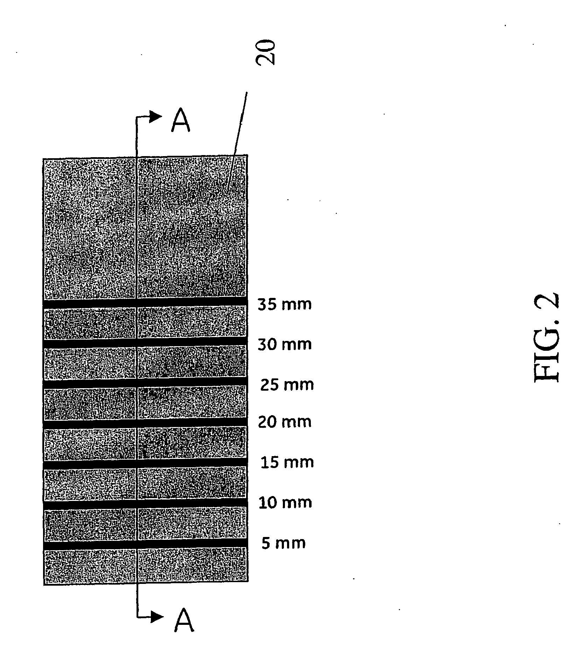

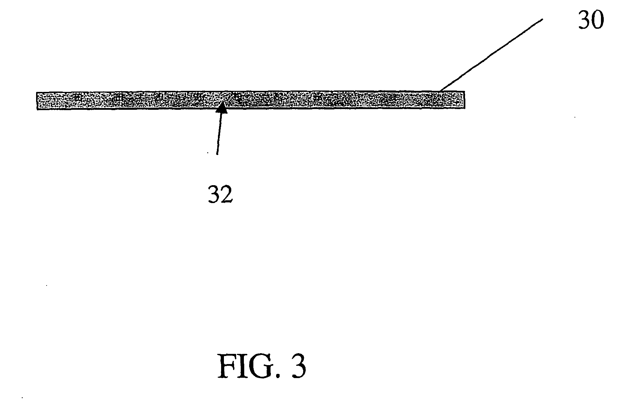

The following experiments were conducted on Inconel 718. An Inconel 718 plate (20) was laser scanned and allowed to air cool. Microhardness measurements were then performed. As indicated in FIGS. 2 and 3, samples were taken from the center of the plate 20 perpendicular to the laser scan path. Microhardness was measured in a closely-spaced checkerboard pattern to capture the effects of lasing on microhardness for each path. Indents 32 were made through the entire thickness of the plate 20. Reference number 30 indicates the lased surface 30 of the plate 20. For this example, about 3000 indents were made at depths of about 20 µms to about 1 mm to look for hardness drops below the threshold. The threshold was defined as the mean minus three standard deviations.

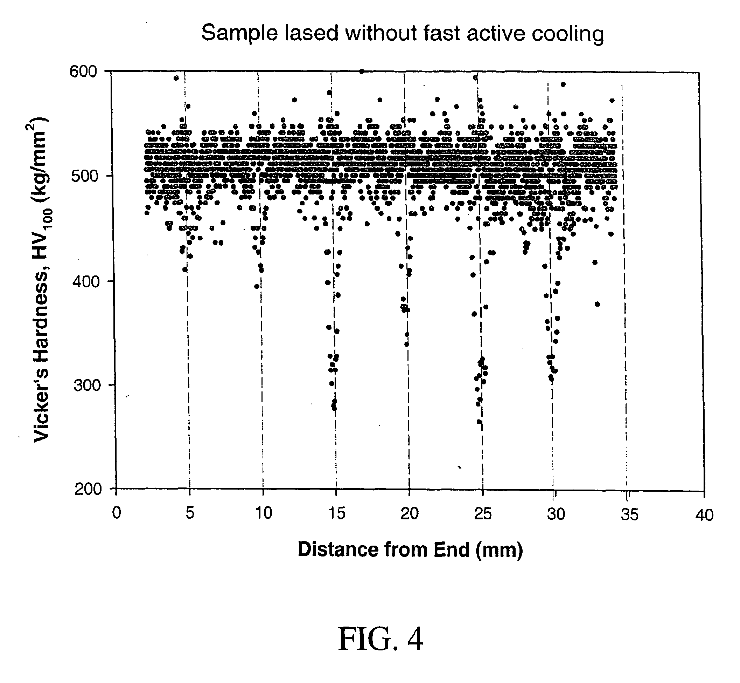

FIG. 4 shows microhardness data for an Inconel 718 plate that was allowed to air cool after laser scanning. The hardness measurements taken perpendicular to the laser scan path show that the strength in the Inconel 718 alloy drops to unacceptably low levels when the specimen is allowed to air cool after laser scanning. Points at or below the threshold line (TH) are considered failed due to lack of hardness.

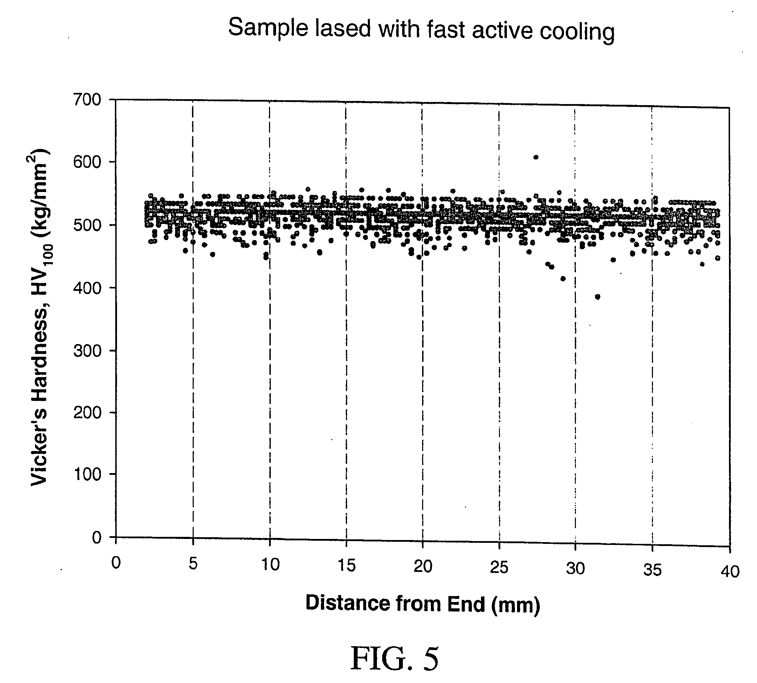

FIG. 5 shows microhardness data for an Inconel 718 plate that was laser scanned across the coupon in less than about 0.4 seconds and then direct water quench cooled within one second after laser scanning. The strength in the Inconel 718 alloy remained within acceptable levels (defined here as the mean minus three standard deviations) due to the fast active cooling employed after the laser scanning. The active cooling shortened the duration of a high temperature event, retarding the precipitate growth and dissolution reaction. Significant geometric bending was achieved, and the strict material integrity test (a combination of direct microstructure optical observation and microhardness measurements) demonstrated that the material integrity (including microhardness, strength and fatigue performance) was maintained.

According to a particular embodiment, the heated regions 22 of specimen 20 should be recovered to room temperature based on a time-temperature-transformation diagram (TTT diagram) for the material. TTT diagrams are available for a variety of alloys and an exemplary TTT diagram for Inconel 718 can be found in Chandler H, ed Heat Treater's Guide: Practices and Procedures for Non-ferrous Alloys, ASM International, Materials Park, OH, 1996, p 52.

The inventive technique is not limited to precipitation strengthened alloys. In other words, embodiments of the invention are not limited to alloys that are prone to precipitate dissolution. Rather, in any circumstances where the kinetics of a detrimental phase change can be avoided, a microstructure can be maintained, while achieving desired geometric alterations via laser forming. For example, exposure of certain titanium alloys to temperatures above which the alloy transforms from a heaxagonally packed close structure to a body centered cubic structure could cause a change in mechanical properties of the alloy. These changes are undesirable. Application of the inventive technique to titanium alloys provides sufficient control of temperature and time at temperature to avoid these undesirable phase changes.

For certain embodiments, the specimen comprises a titanium alloy. As used herein, "titanium based alloys" should be understood to encompass titanium-based superalloys. According to a particular embodiment, the titanium alloy comprises a volume fraction of an α (alpha) phase prior to the heating step. For this embodiment, the process window includes an upper time limit for initiation of the cooling process, and the upper limit is selected such that discontinuity of prior beta grain boundary alpha phase is substantially maintained for the heated region of the specimen. As used here, the phrase "substantially maintained" should be understood to mean that prior beta grain boundary alpha phase for the heated region after the laser forming operations is no more than 510 microns in size.

A system 10 embodiment of the invention is described with reference to FIGS. 6 and 7. As shown for example in FIG. 6, a system 10 for thermal forming includes a thermal source 12 configured for heating at least one region 22 on a specimen 20 to achieve a pre-selected geometry deformation.

The system 10 further includes an active cooling module 14 configured for cooling the heated region to a pre-selected temperature and a control module 16 configured to control at least one of the thermal source 12 and the active cooling module 14 in accordance with a process window in order to initiate active cooling of the heated region 22 by the active cooling module 14 within the process window to control at least one material property of the specimen 20 at the heated region 22. The process window includes an upper time limit for initiation of the cooling. According to a more particular embodiment, the process window further includes a lower time limit for initiation of the cooling.

As discussed above, exemplary thermal sources 12 include a laser 12, nonlimiting examples of which include CW and pulsed lasers. Other exemplary thermal sources 12 include, without limitation, an induction heating system, a plasma arc source, a high power infrared arc lamp heating system and a resistance heating source.

To scan the thermal source 12 across the specimen 20, there are many options. In one implementation, the thermal source 12 is configured to move rotationally and/or translationally relative to the specimen 20, and the specimen 20 is stationary. In another embodiment, the specimen 20 is moved relative to a fixed thermal source 12. Hardware for such relative movement between source 12 and specimen 20 includes, without limitation, robotics, translational stages, and galvanometer scanning systems.

According to a particular embodiment, the control module 16 is configured to control both the thermal source 12 and the active cooling module 14 in accordance with the processing window. For the exemplary embodiment depicted in FIG. 6, the system 10 further includes an algorithm module 18 configured to determine the process window for initiating active cooling. The algorithm module 18 is equipped with the necessary software and hardware to determine the process window for initiating active cooling. The algorithm module 18 may be separate from the control module 16 (as indicated, for example in FIG. 6) or may form an algorithm subunit of control module 16.

The appended claims should be understood to encompass both of these embodiments.

According to a particular embodiment, the specimen 20 comprises a precipitation-strengthened alloy, which comprises a number of precipitates prior to heating by the thermal source 12. For this embodiment, the algorithm module 18 is configured to determine the upper time limit, such that the precipitates are substantially maintained in the heated region 22 of the specimen 20. According to a more particular embodiment, the specimen 20 comprises a nickel-based alloy, which comprises a volume fraction of a γ" phase prior to heating by the thermal source 12. For this exemplary embodiment, the algorithm unit 18 is configured to determine the upper time limit, such that the volume fraction of the γ" phase is substantially maintained for the heated region 22 of the specimen 20.

For another embodiment, the specimen comprises a titanium alloy, which comprises a volume fraction of an α phase prior to the heating step. For this embodiment, the algorithm unit 18 is configured to determine the upper time limit such that the volume fraction of the α phase is substantially maintained for the heated region 22 of the specimen 20.

Several approaches can be employed to actively cool the specimen 20 after being heated by the thermal source 12. For the exemplary embodiment depicted in FIG. 6, the active cooling module 14 comprises a liquid bath 28 configured to receive the specimen 20. Exemplary liquids for use in liquid bath 28 include, without limitation, water, liquid argon, liquid nitrogen, as well as solutions with corrosion-resistant reagent. For the exemplary embodiment illustrated by FIG. 6, the system 30 further includes a robotic arm 26 configured to move the specimen 20 into and out of the liquid bath 28, and the control module 36 is configured to control the movement of the specimen 20 by the robotic arm 26 in accordance with the process window. Other exemplary means for moving the specimen into and out of liquid bath 28 include, without limitation, a cam or wheel driven lever. Other techniques can also be used, for example, a mechanism for raising and lowering the liquid level either by adding and subtracting liquid or by moving the liquid's container. In other embodiments, reference numeral 28 in FIG. 6 represents a fluidized particle bed and/or an initially solid coolant. For the fluidized particle bed embodiment, exemplary particles are formed of copper or another high thermal conductivity metal, and the particles (not shown) provide conductive cooling of the specimen 20. For the initially solid coolant embodiment, the coolant is a solid that melts, for example ice or fat. The transformation of solid to liquid absorbs energy from the specimen 20, thereby cooling the specimen 20.

Another active cooling approach is schematically depicted in FIG. 7. For the exemplary embodiment shown in FIG. 7, the active cooling module 14 comprises a liquid spray source 24 configured for spray cooling the specimen 20. Exemplary liquids for use with liquid source 24 include, without limitation, water, liquid argon, and liquid nitrogen. For the exemplary embodiment shown in FIG. 7, the liquid spray source 24 sprays a water jet at the heated region 22 on the specimen 20. Liquid spray source may further be configured to spray relatively soft solid coolants onto the specimen 20. As noted above, the solid coolants cool the specimen 20 by transformation to a liquid.

For another implementation, the active cooling module 14 comprises a gas spray source (also indicated by reference numeral 24 in FIG. 7) configured for spray cooling the specimen 20. For the exemplary embodiment shown in FIG. 7, gas spray source 24 sprays a gas jet at the heated region 22 on the specimen 20. Exemplary gases for use with gas source 24 include, without limitation, low temperature compressed air, argon, and nitrogen.

The above described method and system embodiments yield thermally formed parts, which maintain material integrity and strength after performance of the thermal heating and active cooling operations. In one embodiment, a part 20 comprises an alloy and at least one thermally formed region 22, where the alloy comprises a volume fraction of a first phase prior to laser forming, and where the volume fraction of the first phase is substantially maintained for the thermally formed region. As used here, the phrase "substantially maintained" should be understood to apply to electrical, thermal, optical, magnetic, or mechanical properties of interest, such that those properties do not fall below a pre-set specification, which for the purposes of this embodiment, comprises three (3) standard deviations from the mean of the material property of interest.

According to a particular embodiment, the alloy comprises a nickel-based alloy, and the first phase comprises a γ" phase. An exemplary nickel-based alloy comprises Inconel 718. According to another embodiment, the alloy comprises a titanium alloy, and the first phase comprises an α phase. Exemplary parts include, without limitation, airfoils, blades, disks, blisks (bladed disks), combustors, plates, flanges, ducts, and tubes.

Although only certain features of various embodiments of the invention have been illustrated and described herein, many modifications and changes will occur to those skilled in the art. It is, therefore, to be understood that the appended claims are intended to cover all such modifications and changes as fall within the true spirit of the invention.

### Parts List

- 10: system
- 12: thermal source (laser)
- 14: active cooling module
- 16: control module
- 18: algorithm module
- 20: specimen
- 22: region on specimen
- 24: liquid (gas) spray source
- 26: robotic arm
- 28: liquid bath
- 30: lased surface of specimen
- 32: microhardness indents

## Claims

1. A method for thermal forming comprising:
determining a process window for initiation of a cooling process;
locally heating at least one region on a specimen to achieve a pre-selected geometry deformation;
initiating active cooling of the heated region within the process window to control at least one material property of the specimen at the heated region; and
actively cooling the heated region to a pre-selected temperature.

2. The method of Claim 1, wherein the material property comprises microhardness, and wherein the microhardness is controlled to within about three standard deviations of a mean initial hardness.

3. The method of Claim 1 or Claim 2, wherein the specimen comprises a precipitation-strengthened alloy, wherein the precipitation-strengthened alloy comprises a plurality of precipitates prior to said heating step, wherein the process window comprises an upper time limit for initiation of the cooling process, and wherein the upper limit is selected such that the precipitates are substantially maintained in the heated region of the specimen.

4. The method of Claim 1 or Claim 2, wherein the specimen comprises a precipitation-strengthened alloy, wherein the precipitation-strengthened alloy comprises a nickel-based alloy, wherein the nickel-based alloy comprises a volume fraction of a γ" phase prior to said heating step, wherein the process window comprises an upper time limit for initiation of the cooling process, wherein the upper limit is selected such that the volume fraction of the γ" phase is substantially maintained for the heated region of the specimen, and wherein said heating step comprises laser heating the at least one region.

5. The method of Claim 1 or Claim 2, wherein the specimen comprises a titanium alloy, wherein the titanium alloy comprises a volume fraction of an α phase prior to said heating step, wherein the process window comprises an upper time limit for initiation of the cooling process, wherein the upper limit is selected such that a discontinuity of a prior beta grain boundary alpha phase is substantially maintained for the heated region of the specimen, and wherein said heating step comprises laser heating the at least one region.

6. The method of any preceding Claim, wherein the process window comprises an upper time limit and a lower time limit for initiation of the cooling process, and wherein said determining the process window comprises determining at least one of the upper and lower time limits using one at least one of experimental data and simulation data.

7. A system (10) for thermal forming comprising:
a thermal source (12) configured for heating at least one region (22) on a specimen (20) to achieve a pre-selected geometry deformation;
an active cooling module (14) configured for cooling the heated region to a pre-selected temperature; and
a control module (16) configured to control at least one of said thermal source and said active cooling module (14) in accordance with a process window in order to initiate active cooling of the heated region by said active cooling module within the process window to control at least one material property of the specimen at the heated region, wherein the process window comprises an upper time limit for initiation of the cooling.

8. The system (10) of Claim 7, further comprising an algorithm module (18) configured to determine the process window for initiating active cooling, wherein said thermal source comprises a laser (12), and wherein said control module is configured to control both of said thermal source and said active cooling module (14) in accordance with the processing window.

9. The system (10) of Claim 7 or Claim 8, wherein said active cooling module (14) is selected from the group consisting of:
a liquid bath (28) configured to receive the specimen (20),
a liquid spray source (24) configured for spray cooling the specimen,
a gas spray source (24) configured for spray cooling the specimen,
a fluidized particle bed (28) configured to receive the specimen,
an initially solid coolant (28) configured to receive the specimen and combinations thereof.

10. A part (20) comprising an alloy and at least one thermally formed region (22), wherein the alloy comprises a volume fraction of a first phase prior to laser forming, and wherein the volume fraction of the first phase is substantially maintained for the thermally formed region.
